# EUROPÄISCHE PATENTSCHRIFT

(11) **EP 3 493 977 B1**
(45) Veröffentlichungstag und Bekanntmachung des Hinweises auf die Patenterteilung: **09.11.2022**
(21) Anmeldenummer: 17739195.0
(22) Anmeldetag: 11.07.2017
(51) Int. Cl.: B29C 70/52, B29C 70/56

(54) **VERFAHREN UND VORRICHTUNG ZUR HERSTELLUNG EINES KUNSTSTOFFPROFILS**
METHOD AND DEVICE FOR PRODUCING A PLASTIC PROFILE
PROCÉDÉ ET DISPOSITIF DE FABRICATION D'UN PROFILÉ EN MATIÈRE PLASTIQUE

(30) Priorität: 05.08.2016 DE 102016009474; 16.08.2016 DE 102016009953
(43) Veröffentlichungstag der Anmeldung: 12.06.2019
(73) Patentinhaber: Thomas Beteiligungs- und Vermögens-GmbH & Co. KG, 27432 Bremervörde (DE)
(72) Erfinder: JANSEN, Klaus, 21614 Buxtehude (DE)
(74) Vertreter: Möller, Friedrich
(86) Internationale Anmeldenummer: PCT/EP2017/000818
(87) Internationale Veröffentlichungsnummer: WO 2018/024357

(56) Entgegenhaltungen:
- DE-A1-102014 011 943
- US-A1- 2009 206 515

## Beschreibung

Die Erfindung betrifft ein Verfahren zum Herstellen eines vorzugsweise gekrümmten Kunststoffprofils gemäß dem Oberbegriff des Anspruchs 1. Des Weiteren betrifft die Erfindung eine Vorrichtung zur Herstellung eines vorzugsweise gekrümmten Kunststoffprofils gemäß dem Oberbegriff des Anspruchs 12.

Es ist bekannt, dass insbesondere gerade Kunststoffprofile aus Kunststoff und einer durchgehenden Verstärkung aus Fasern, Geweben oder dergleichen, die in den Kunststoff eingebettet sind, durchgehend in einem Strang hergestellt werden. Bei dieser Herstellung handelt es sich üblicherweise um ein Pultrusionsverfahren, wie beispielsweise in DE 10 2014 011 943 A1 beschrieben. Bei derartigen Pultrusionsverfahren wird der mindestens eine Faserstrang durch eine Form hindurchgeführt. Dieser Faserstrang wird entweder vor oder in der Form während des Hindurchführens mit flüssigem Kunststoff versehen, der anschließend in der Form aushärtet. Das sodann die Form verlassende ausgehärtete Kunststoffprofil wird durch eine in Herstellungsrichtung vor der Form angeordneten Abzieheinrichtung bzw. Haltemittel durch die Form gezogen und dabei gleichzeitig abtransportiert.

Für die Herstellung gekrümmter Kunststoffprofile ist es bekannt, dass hierzu die Form bewegt werden muss. Dieses Verfahren ist unter der Bezeichnung Radius-Pultrusion bekannt und wird beispielsweise in DE 2009/0206515 A1 beschrieben. Hierbei wird die Form periodisch erst relativ zum stillstehenden Kunststoffprofil bewegt und dieses in der Gegenbewegung durch das geöffnete Haltemittel abtransportiert. Durch dieses periodische Bewegen bzw. Stehenbleiben des Kunststoffprofils kann es innerhalb des Faserstranges des herzustellenden Profils vor oder in der Tränkeinheit zu Faserverlagerungen und anschließenden Verspannungen oder -verzerrungen kommen. Diese mechanische Spannung bzw. Verzerrungen wirken sich negativ auf die Struktur bzw. Stabilität des Kunststoffprofils aus, da die Faserverteilung unter Umständen nicht mehr homogen ist.

Der Erfindung liegt daher die Aufgabe zugrunde, ein Verfahren und eine Vorrichtung zur störungsfreien Herstellung individuell gekrümmter Kunststoffprofile zu schaffen.

Ein Verfahren zur Lösung dieser Aufgabe weist die Maßnahmen des Anspruchs 1 auf. Demnach ist es vorgesehen, dass die Form und das Haltemittel auf dem Kunststoffprofil in entgegengesetzte Richtungen bewegt werden, wobei das Kunststoffprofil abwechselnd von der Form und dem Haltemittel in eine Herstellungsrichtung bewegt wird, wobei die Form und das Haltemittel gleichzeitig bewegt werden, während das Kunststoffprofil in Herstellungsrichtung von der Form oder dem Haltemittel vorbewegt wird. Durch diese insbesondere ununterbrochene Bewegung des Kunststoffprofils ist ein kontinuierlicher Abtransport des Kunststoffprofils möglich. Phasen, in denen das Kunststoffprofil still steht, können so vermieden werden. Da somit das Kunststoffprofil ununterbrochen in Bewegung ist, d. h. nicht oder nur kurzfristig zum Stillstand kommt, können mechanische Spannungen oder Verspannungen in dem Kunststoffprofil bzw. in der Führung des Fasermaterials vermieden werden. Dadurch erhöht sich die Stabilität bzw. die Qualität des Kunststoffprofils.

Insbesondere kann es die Erfindung vorsehen, dass das Kunststoffprofil von dem Haltemittel gehalten und in eine Herstellungsrichtung gezogen wird, während die Form auf, insbesondere über das, Kunststoffprofil entgegen der Herstellungsrichtung bewegt wird. Des Weiteren besteht eine vorteilhafte Weiterbildung der vorliegenden Erfindung darin, dass das Kunststoffprofil von der Form in Herstellungsrichtung bewegt bzw. geschoben wird, während das Haltemittel auf dem Kunststoffprofil entgegen der Herstellungsrichtung auf die Form zubewegt, insbesondere in Kontakt mit der Form gebracht wird. Durch dieses abwechselnde Halten und Ziehen des Kunststoffprofils durch die Form und das Haltemittel, wird das Halbzeug des herzustellenden Kunststoffprofils einer gleichmäßigeren Zugkraft als bei einem isolierten Hin- und Herbewegen nur der Form ausgesetzt. Diese nahezu gleichmäßig auf das zugeführte Material wirkende Kraft sorgt dann für eine besonders gleichmäßige innere Struktur des Profils. Durch dieses schrittweise Formen in der Form gekoppelt mit einem zeitweise überwiegend ziehenden Abtransportieren des Kunststoffprofils lassen sich insbesondere auch gekrümmte Kunststoffprofile herstellen, da Formungen des Profils immer noch überwiegend in der Bewegung der sich periodisch bewegenden Form konsolidiert werden.

Bevorzugt kann es weiter vorgesehen sein, dass die Form und das Haltemittel gleichzeitig bewegt werden, während das Kunststoffprofil ununterbrochen in Herstellungsrichtung von der Form oder dem Haltemittel vorbewegt wird. Dabei erfolgt die Bewegung so, dass die Form und das Haltemittel zu Beginn eines Herstellungsschrittes voneinander weg bewegt werden, um sich danach wieder zu berühren. Während dieser raupenartigen Relativbewegung der Form und des Haltemittels wird das Kunststoffprofil ständig relativ zu der Form und/oder zu dem Haltemittel in Herstellungsrichtung vorbewegt.

Ein weiteres Ausführungsbeispiel der vorliegenden Erfindung kann es außerdem vorsehen, dass die Form und das Haltemittel mit unterschiedlichen Geschwindigkeiten in und/oder entgegen der Herstellungsrichtung auf dem Kunststoffprofil, insbesondere mit unterschiedlichen Beschleunigungen, bewegt werden. So kann es beispielsweise vorgesehen sein, dass das Haltemittel mit dem Kunststoffprofil mit der doppelten Geschwindigkeit in Herstellungsrichtung gezogen wird, wie sich die Form in die entgegengesetzte Richtung bewegt. Durch diese Bewegungen der Form und des Haltemittels in entgegengesetzte Richtungen addieren sich die beiden Geschwindigkeitskomponenten zu einer Herstellungsgeschwindigkeit, welche der Summe der Geschwindigkeitsbeträge der Form und des Haltemittels entspricht. Gleichermaßen kann sich auch die Form mit einer höheren Geschwindigkeit entgegen der Herstellungsrichtung bewegen, als sich das Haltemittel in Herstellungsrichtung bewegt.

Für einen gleichmäßigen Abtransport des Kunststoffprofils in Herstellungsrichtung erfolgt die Zurückbewegung der Form und des Haltemittels in eine Ausgangsstellung, in welcher der Abstand zwischen der Form und des Haltemittels minimiert ist, mit der gleichen Geschwindigkeit. Dadurch, dass die Zeitspannen, in denen sich die Form und das Haltemittel entgegen bzw. in Herstellungsrichtung bewegen, identisch sind, ist die Strecke des Abtransports des Kunststoffprofils beim Zusammenbewegen der Form und des Haltemittels kleiner als beim vorherigen Auseinanderbewegen der Form und des Haltemittels. Durch diese unterschiedlichen Geschwindigkeiten erfährt der Abtransport des Kunststoffprofils somit leichte Variationen; ein totaler Stillstand wird aber vermieden. Es ist jedoch auch denkbar, dass nicht die Zeitspanne, während der sich die Form bzw. das Haltemittel entgegen bzw. in Herstellungsrichtung bewegen, gleich ist, sondern die Wegstrecke, welche die Form und das Haltemittel trotz unterschiedlicher Geschwindigkeiten auf dem Kunststoffprofil zurücklegen. Dadurch kann es je nach Geschwindigkeitsverteilung der Form bzw. des Haltemittels vorkommen, dass die Form oder das Haltemittel kurzzeitig auf dem Kunststoffprofil still steht.

Eine weitere Ausführungsform der vorliegenden Erfindung kann es vorsehen, dass die Form und das Haltemittel mit unterschiedlichen Hub bzw. unterschiedlichen Amplituden und/oder Frequenz auf dem Kunststoffprofil vorbewegt werden. Mit diesen unterschiedlichen Hubbewegungen kann beispielsweise der Aushärtungsprozess des Kunststoffprofils in der Form bestimmt werden. So lassen sich für verschiedene Materialien und verschiedenartige Profilformen die Geschwindigkeit sowie die Beschleunigung und der Hub der Form bzw. des Haltemittels entsprechend einstellen, damit ein Kunststoffprofil höchster Qualität erzeugt wird. Beispielsweise kann es zum Ausformen des Kunststoffprofils vorteilhaft sein, wenn die Form und das Haltemittel mit unterschiedlichen Frequenzen bewegt werden. Während die Form beispielsweise vier Hübe mit einer relativ geringen Amplitude durchführt, vollführt das Haltemittel im gleichen Zeitabschnitt nur eine Hubbewegung, allerdings mit einer, insbesondere entsprechend, größeren Amplitude. Anderseits ist es genauso vorgesehen, dass das Haltmittel mehrere Hübe durchführt, während die Form nur wenige oder nur einen Hub vollführt. Diese unterschiedlichen Hubzahlen lassen sich zusätzlich mit verschiedenen Geschwindigkeiten der Form und des Haltemittels kombinieren, so dass sich deren Bewegung, insbesondere auch mit einer Bewegung der Kühl- und/oder Kalibrierungsform, synchronisieren bzw. aufeinander abstimmen lassen. Durch entsprechende Kombination der möglichen Bewegungsformen der Form, des Haltemittels und insbesondere der Kühl- und/oder Kalibrierungsform lassen sich nahezu beliebig geformte Kunststoffprofile störungsfrei herstellen.

Insbesondere kann es vorgesehen sein, dass die Form und das Haltemittel diskontinuierlich bzw. schrittweise auf dem Kunststoffprofil hin und her bewegt werden, wobei nur während der Bewegung der Form und des Haltemittels entgegen der Herstellungsrichtung eine Relativbewegung der Form und des Haltemittels zum Kunststoffprofil erfolgt. Durch diese schrittweise Übergabe des Kunststoffprofils an das Haltemittel bzw. die Form zum Abtransport wird eine besonders gleichmäßige Bewegung und somit Abziehen der Fasern von den Faserspulen erreicht. Durch diese Gleichmäßigkeit erfolgt die Herstellung des Kunststoffprofils besonders spannungsfrei.

Verfahrensmäßig kann es bevorzugt vorgesehen sein, dass das Haltemittel in Phasen, in denen sich das Haltemittel und die Form auf dem Kunststoffprofil aufeinander zu bewegen, außer Kontakt mit dem Kunststoffprofil gebracht und das Kunststoffprofil nur von der Form reibungsbedingt gehalten wird und das Kunststoffprofil in Phasen, in denen sich das Haltemittel und die Form in entgegengesetzte Richtungen voneinander entfernen relativ zu der Form bewegt und nur vom Haltemittel gehalten wird.

Nach einer weiteren Ausgestaltung des Verfahrens kann es vorgesehen sein, dass das Kunststoffprofil während der Herstellung von einer Kühlform und/oder einer Kalibrierungsform gekühlt und/oder kalibriert wird, wobei die Kühl- und/oder Kalibrierungsform insbesondere zwischen der Form und dem Haltemittel auf dem Kunststoffprofil geführt wird. Durch die Kühlung bzw. Kalibrierung des Kunststoffprofils während der Herstellung, kann das Profil besonders schnell aushärten und mit einer hohen Qualität hergestellt werden. Insbesondere für das Halten des Kunststoffprofils durch das Haltemittel und Vorziehen, ist es wichtig, dass das Kunststoffprofil schnell auskühlt. Beim Radius-Pultrusionsverfahren ist es vorteilhaft, das Profil nach dem Verlassen der Form und vor dem Eintritt in den Greifer noch einmal herunter zu kühlen, entweder damit es stabil genug ist oder um das Material des Greifers nicht zu zerstören. Da das Profil beim Verlassen der Form noch etwas verformbar sein kann, könnte es zudem durch die Abzugskraft, die sich zwischen Form und Greifer aufbaut, auch noch etwas verformt, z.B. gestreckt, werden. In Abhängigkeit von der Situation kann auch die Kühlform zusätzlich die Funktion übernehmen, den Radius und/oder die Querschnittsform des Profils zu korrigieren bzw. kalibrieren. Bei der Kühl- und Kalibrierform muss es sich daher nicht um ein separates Bauteil handeln, es kann sich dabei vielmehr auch um ein Teil der Form handeln.

Des Weiteren kann es vorgesehen sein, dass die Kühl- und/oder Kalibrierungsform gekoppelt mit der Bewegung der Form und/oder dem Haltemittel auf dem Kunststoffprofil bewegt wird. Durch diese Kopplung der Bewegung des Kühl- und/oder Kalibrierungselementes an die Bewegung der Form und/oder des Haltemittels wird die Gesamtbewegung des Kunststoffprofils an die Bewegung der Kühl- und/oder Kalibrierungsform angepasst. Dadurch lässt sich der Kühl- und/oder Kalibrierungsprozess der Herstellung des Kunststoffprofils bedarfsweise anpassen.

Weiter kann es eine besondere Ausführungsform der vorliegenden Erfindung vorsehen, dass die Verstärkung während der Bewegung der Form stramm gehalten wird. Durch das Strammhalten der Verstärkung wird die Verstärkung genau dort in die Form eingezogen, wo es vorgesehen ist. Etwaige Verspannungen oder andere Störungen durch unsachgemäße Einführung der Verstärkung können somit unterbunden werden.

Eine Vorrichtung zur Lösung der eingangs genannten Aufgabe weist die Merkmale des Anspruchs 12 auf. Demnach ist es vorgesehen, dass die mindestens eine Form und das mindestens ein Haltemittel auf dem Kunststoffprofil gleichzeitig in entgegengesetzte Richtungen vor- und zurückbewegbar sind. Durch diese bewegliche Anordnung des Haltemittels und der Form auf dem Kunststoffprofil ist es möglich, das Kunststoffprofil in einer wenigstens nahezu kontinuierlichen Art und Weise in Herstellungsrichtung abzutransportieren. Durch eine Reduzierung der Stillstandsphasen des Kunststoffprofils werden mechanische Spannungen sowie Verspannungen beim Einziehen der Verstärkungen in die Form unterbunden. Durch dieses raupenartige, synchronisierte Vor- und Zurückbewegen der Form und des Haltemittels wird das Kunststoffprofil gleichzeitig von der Form ausgebildet als auch abtransportiert. Durch die gleichzeitige entgegengesetzte Bewegung der Form und des Haltemittels addieren sich die Geschwindigkeitsbeträge der Form und des Haltemittels, wodurch es zu einer erhöhten Herstellungsgeschwindigkeit des Kunststoffprofils kommt, welche die Geschwindigkeit der Form und des Haltemittels übertrifft. Somit wird sowohl eine hohe Qualität des herzustellenden Kunststoffprofils erreicht, als auch eine erhöhte Herstellungsgeschwindigkeit des Profils.

Ein weiteres vorteilhaftes Ausführungsbeispiel der vorliegenden Erfindung kann es vorsehen, dass das mindestens eine Haltemittel in Herstellungsrichtung betrachtet vor der mindestens einen Form angeordnet ist, wobei das mindestens eine Haltemittel und/oder die mindestens eine Form zur Herstellung einer lösbaren Greifverbindung mit dem fertigen Kunststoffprofil ausgebildet sind. Durch die Ausbildung der Form und des Haltemittels als eine Art Greifvorrichtung, welche das Kunststoffprofil lösbar erfassen kann, ist das Kunststoffprofil nahezu kontinuierlich in die Herstellungsrichtung transportierbar. Das Greifen bzw. Erfassen oder Halten des Kunststoffprofils erfolgt in einem schnellen Wechsel zwischen der Form und dem Haltemittel, wobei jeweils die das Kunststoffprofil haltende Einrichtung das Profil in Herstellungsrichtung vorbewegt. Während das Haltemittel zweiteilig ausgebildet sein kann und sich zum Halten des Profils die beiden Teile um das Profil legen, erfolgt das Halten des Kunststoffprofils durch die Form eher reibungsbedingt. Die Reibung zwischen der Form und dem Kunststoffprofil ist größer als die Gegenkräfte, wie beispielsweise durch die Stränge, die in die Form eingezogen werden.

Außerdem kann es erfindungsgemäß vorgesehen sein, dass auf dem Kunststoffprofil, insbesondere zwischen der Form und dem Haltemittel, eine Kühlform und/oder eine Kalibrierungsform angeordnet sind. Während die Kühlform mit einem zuführbaren Kühlmittel versehbar ist oder einen internen Kühlmechanismus aufweist, weist die Kalibrierungsform entsprechende Mittel zur Kalibrierung des Verfahrens bzw. der Vorrichtung zur Herstellung des Kunststoffprofils auf. Durch diese Integration der Kühl- und/oder Kalibrierungsform lässt sich eine besonders kompakte und effiziente Vorrichtung realisieren. Es ist außerdem denkbar, dass zwischen der mindestens einen Form und zwischen dem mindestens einem Haltemittel weitere Formen oder Elemente positionierbar sind, welche der Herstellung des Kunststoffprofils dienen. Derartige Elemente können in Herstellungsrichtung betrachtet auch hinter dem mindestens einen Haltemittel angeordnet sein.

Nachfolgend werden bevorzugte Ausführungsbeispiele der Erfindung anhand der Zeichnung näher erläutert. In dieser zeigen:
Fig. 1a eine schematische Ansicht eines ersten Ausführungsbeispiels einer erfindungsgemäßen Vorrichtung in einer Ausgangsstellung,
Fig. 1b die Vorrichtung der Fig. 1 nach einem ersten Arbeitsschritt, der auf die Ausgangsstellung folgt,
Fig. 1c die Vorrichtung der Fig. 1a und 1b vor einem zweiten Arbeitsschritt,
Fig. 1d die Vorrichtung der Fig. 1a bis 1c in einer Endstellung,
Fig. 2a eine schematische Ansicht eines zweiten Ausführungsbeispiels einer erfindungsgemäßen Vorrichtung in einer Ausgangsstellung,
Fig. 2b die Vorrichtung der Fig. 2a nach einem ersten Arbeitsschritt, der auf die Ausgangsstellung folgt,
Fig. 2c die Vorrichtung der Fig. 2a und 2b vor einem zweiten Arbeitsschritt,
Fig. 2d die Vorrichtung der Fig. 2a bis 2c in einer Endstellung,
Fig. 3a eine schematische Ansicht eines weiteren Ausführungsbeispiels einer erfindungsgemäßen Vorrichtung in einer Ausgangsstellung,
Fig. 3b die Vorrichtung der Fig. 3a nach einem ersten Arbeitsschritt, der auf die Ausgangsstellung folgt,
Fig. 3c die Vorrichtung der Fig. 3a und 3b vor einem zweiten Arbeitsschritt,
Fig. 3d die Vorrichtung der Fig. 3a bis 3c in einer Endstellung.

Die Figuren zeigen stark schematisiert eine erfindungsgemäße Vorrichtung, die auch zur Durchführung des erfindungsgemäßen Verfahrens dient. Bei dieser Vorrichtung handelt es sich um eine Pultrusionsvorrichtung für ein Kunststoffprofil 10 mit einer innenliegenden Verstärkung 11 und einem diese umgebenden Kunststoff 12, bei dem es sich vorzugsweise um einen Duroplast handeln kann. Im nur schematisch gezeigten Ausführungsbeispiel wird davon ausgegangen, dass die Verstärkung 11 aus einer Vielzahl endloser Stränge 13 aus vorzugsweise hochzugfesten Fasern, beispielsweise Kohlefasern, besteht. Im Kunststoff 12 des Kunststoffprofils 10 können aber auch beliebig andere Verstärkungen eingebettet sein, beispielsweise aus Geweben und/oder Gewirken bzw. in Kombination der Stränge 13 mit Geweben und/oder Gewirken.

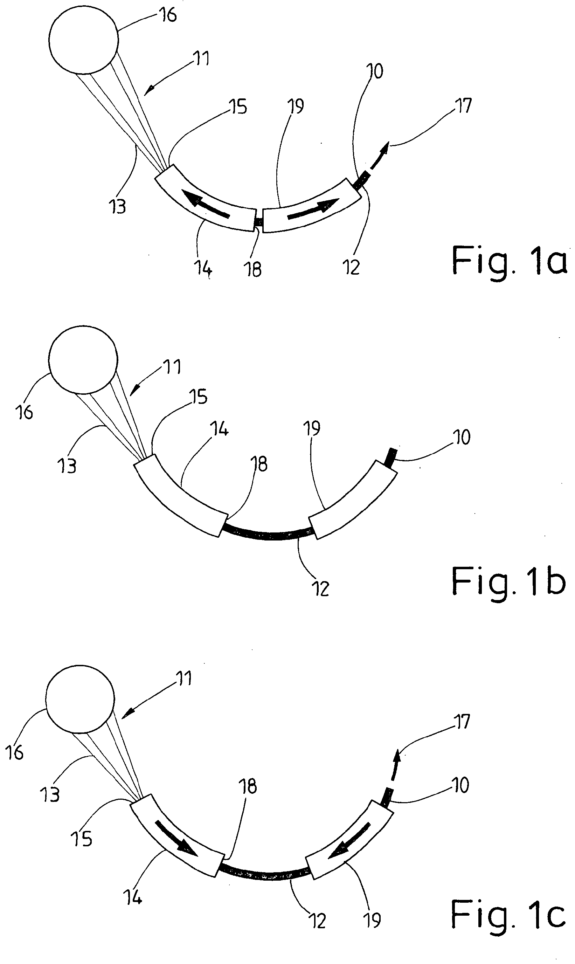

Mit der schematisch gezeigten Vorrichtung und dem erfindungsgemäßen Verfahren lassen sich durch Pultrusion Kunststoffprofile 10 mit einem beliebigen Verlauf herstellen. In den Figuren ist exemplarisch ein gebogenes Kunststoffprofil 10 gezeigt, das einen kreisförmigen Verlauf erhält. Das gezeigte Kunststoffprofil 10 ist in einer Ebene gebogen. Es ist aber auch denkbar, mit der erfindungsgemäßen Vorrichtung und dem erfindungsgemäßen Verfahren Kunststoffprofile 10 herzustellen, die über einen räumlichen (dreidimensionalen) Verlauf verfügen. Die in den Figuren 1a bis 1d gezeigte Vorrichtung weist eine Form 14 auf, die dem bogenförmigen Verlauf des herzustellenden Kunststoffprofils 10 entspricht. Eine Längsmittelachse der Form 14 ist dementsprechend genauso gebogen wie das herzustellende Kunststoffprofil 10, wodurch der Radius des Kunststoffprofils 10 und der Längsmittelachse der Form 14 gleich sind. Die Form 14 weist eine Anpassung an den gekrümmten Verlauf des Kunststoffprofils 10 auf, die im gezeigten Ausführungsbeispiel der Gestalt eines Kreisringabschnittes ähnlich sind.

Einem hinteren Ende 15 der Form 14 ist eine schematische in den Figuren dargestellte Abspuleinrichtung 16 zugeordnet. Diese nimmt einen gewissen Vorrat der Verstärkung 11 auf. Im gezeigten Ausführungsbeispiel der Fig. 1a bis 1d, bei denen die Verstärkung 11 aus mehreren Strängen 13 gebildet ist, sind auf der Abspuleinrichtung 16 eine entsprechende Anzahl von Spulen mit einem größeren Vorrat der Stränge 13 angeordnet. Die Spulen können angetrieben und/oder abbremsbar sein, sodass die Stränge 13 stets mit einer vorgebbaren Spannung stramm haltbar sind.

Im Bereich des hinteren Endes 15, an dem die Stränge 13 in die Form 14 einlaufen, ist auch eine in den Figuren nicht gezeigte Einrichtung zum Zuführen flüssigen, insbesondere heißen, Kunststoffes 12 vorgesehen. Der Form 14 wird dadurch flüssiger Kunststoff 12 zugeführt, um die Stränge 13 hiermit zu ummanteln. Mit der Zeit erstarrt der Kunststoff 12 in der Form 14 und härtet dabei aus.

Bei dem in den Fig. 1a bis 1d dargestellten Ausführungsbeispiel der erfindungsgemäßen Vorrichtung ist in Herstellungsrichtung 17 gesehen ein mit geringem Abstand vor dem vorderen Ende 18 der Form 14 an dem Kunststoffprofil 10 angeordnetes Haltemittel 19 vorgesehen. Hierbei kann es sich genau wie bei der Form 14 um einen Greifer zum lösbaren Ergreifen des Kunststoffprofils 10 handeln. Das Haltemittel kann das fertige Kunststoffprofil 10 in einem sich vor der Form 14 befindlichen Bereich ergreifen und festhalten, aber auch vom Kunststoffprofil 10 gelöst werden. Des Weiteren ist es denkbar, ein zusätzliches Haltemittel dem zu der Abspuleinrichtung 16 weisenden hinteren Ende 15 der Form 14 zuzuordnen, wobei dieses Haltemittel vor dem hinteren Ende 15 der Form angeordnet oder auch im hinteren Ende 15 der Form 14 positioniert sein kann.

Sowohl der Form 14 als auch dem Haltemittel 19 ist jeweils ein eigener Schlitten zugeordnet. Diese Schlitten sind in den Figuren nicht gezeigt. Diese Schlitten folgen in Herstellungsrichtung 17 aufeinander, wobei in Herstellungsrichtung 17 gesehen, der Schlitten für das Haltemittel 19 sich vor dem Schlitten der Form 14 befindet. Die Schlitten sind so ausgebildet, dass daran sowohl die Form 14 als auch das Haltemittel 19 den bogenförmigen Verlauf des Kunststoffprofils 10 folgend verfahrbar sind. Die Schlitten sind mit unabhängigen Antrieben versehen und verfügen über Steuerungen, die ein unabhängiges Verfahren zulassen.

Bei komplexeren Verläufen des Kunststoffprofils 10, insbesondere bei räumlich dreidimensionalen gebogenen Kunststoffprofilen 10, sind die Bahnen der Schlitten und auch die Gestalt der Form 14 entsprechend angepasst. Denkbar ist es auch sowohl die Form 14 als auch das Haltemittel 19 an eine entsprechende Anzahl Freiheitsgrade oder Achsen aufweisende Roboterarmen anzuordnen, wodurch infolge entsprechend koordinierter Steuerungen die Roboter die Form 14 und auch das Haltemittel 19 auf beliebigen Bahnen entsprechend den gewünschten Verlauf des Kunststoffprofils 10 bewegen und dadurch mit einer solchen Vorrichtung Kunststoffprofile 10 beliebiger Gestalt, auch dreidimensionaler Gestalt, herstellbar sind.

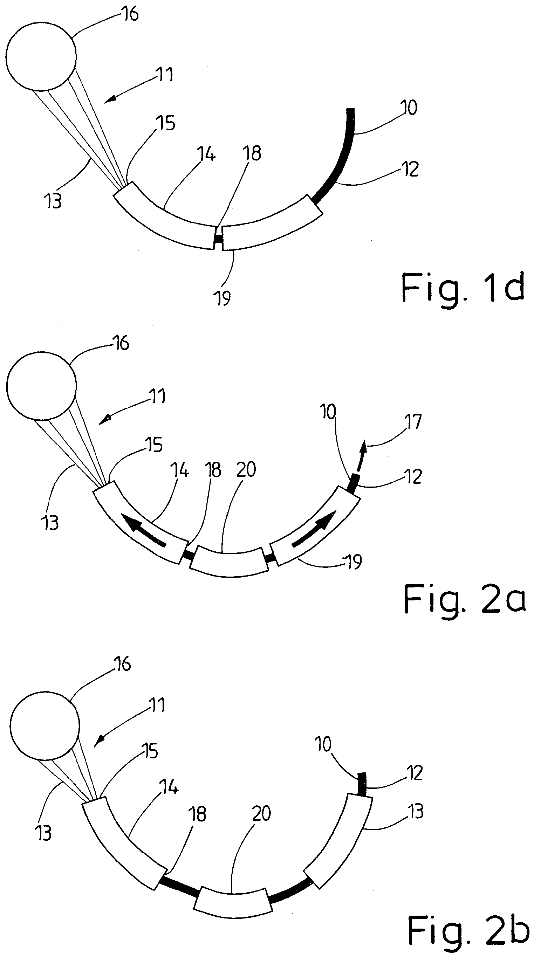

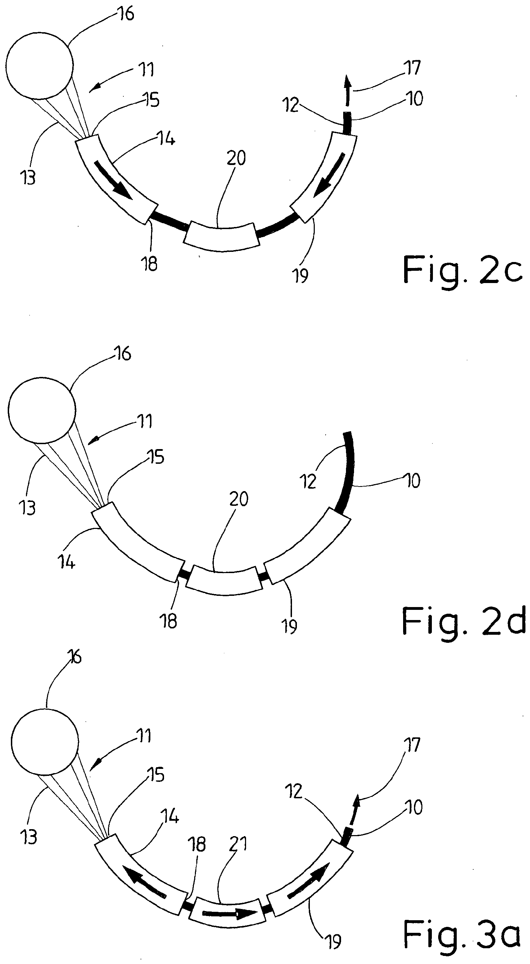

Bei einem weiteren in den Fig. 2a bis 2d dargestellten Ausführungsbeispiel der erfindungsgemäßen Vorrichtung ist auf dem Kunststoffprofil 10 zwischen der Form 14 eine Kühlform 20 angeordnet. Bei dieser Kühlform 20 kann es sich alternativ auch um eine Kalibrierungsform handeln bzw. kann die Kühlform 20 gleichzeitig Kühlform 20 und Kalibrierungsform sein. Diese Kühlform 20 ist gemäß dem Ausführungsbeispiel der Fig. 2a bis 2d stationär zwischen der Form 14 und dem Haltemittel 19 angeordnet, d. h. die Kühlform 20 ist nicht auf einem Schlitten in bzw. entgegen der Herstellungsrichtung 17 bewegbar.

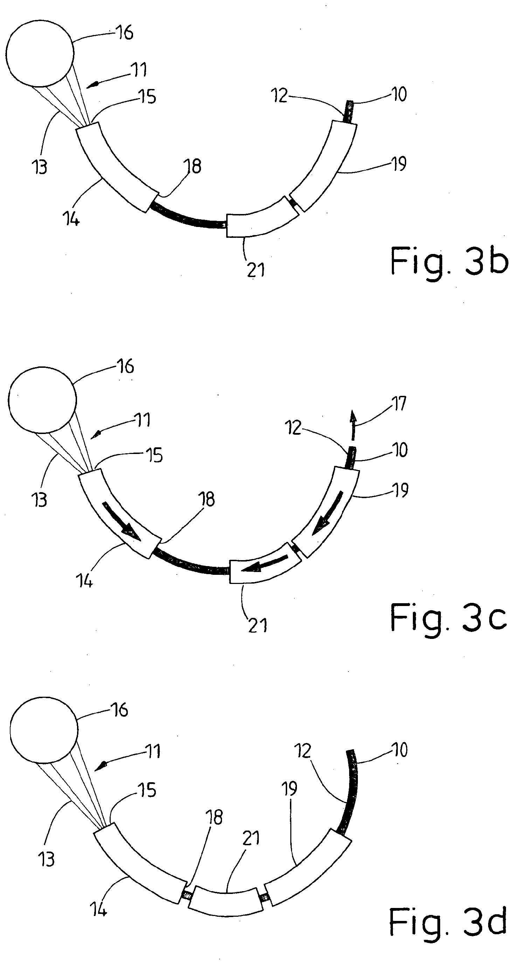

Ein in den Fig. 3a bis 3d dargestelltes Ausführungsbeispiel der vorliegenden Erfindung weist ebenfalls eine Kühlform 21 auf, bei der es sich ebenfalls alternativ um eine Kalibrierungsform handeln kann. Die in den Fig. 3a bis 3d dargestellte Kühlform kann auch einem nicht dargestellten verfahrbaren Schlitten so zugeordnet sein, dass sich die Kühlform 21 genau wie die Form 14 und das Haltemittel 19 auf dem Kunststoffprofil 10 in oder entgegen der Herstellungsrichtung 17 bewegen kann.

Nachfolgend wird das erfindungsgemäße Verfahren am Beispiel der Herstellung eines kreisbogenförmigen Kunststoffprofils 10 näher erläutert:
In der Fig. 1a ist eine Ausgangsstellung des Verfahrens zur Herstellung eines Kunststoffprofils 10 dargestellt, mittels dem in den Fig. 1a bis 1d dargestelltem Ausführungsbeispiel der erfindungsgemäßen Vorrichtung. In dieser Ausgangsstellung befinden sich die Form 14 und das Haltemittel 19 dicht zusammen bzw. berühren sich. Im Folgenden bewegen sich die Form 14 und das Haltemittel 19 auf dem Kunststoffprofil 10 in entgegengesetzte Richtungen auf dem Kunststoffprofil 10. Dabei wird das bereits fertiggestellte Kunststoffprofil 10 durch das Haltemittel 19 gehalten, wodurch dieses in Herstellungsrichtung 17 abtransportiert wird. Der Abstand zwischen der Form 14 und dem Haltemittel 19 wächst dabei. Während dieser Bewegung der Form 14 und des Haltemittels 19 entlang des Kunststoffprofils 10 wird in das hintere Ende 15 der Form 15 weitere Stränge 13 eingezogen. Ebenfalls wird der flüssige Kunststoff (hier nicht dargestellt) dem hinteren Ende 15 der Form 14 zugeführt. Die Geschwindigkeit der Form 14 und des Haltemittels 19 auf dem Kunststoffprofil 10 ist identisch, kann sich aber auch voneinander unterscheiden, sodass beispielsweise das Haltemittel 19 mit einer größeren Geschwindigkeit in Herstellungsrichtung 17 bewegt wird, als die Form 14.

Sobald die Form 14 sowie das Haltemittel 19 ihre maximale Amplitude, d. h. ihren größten Abstand zueinander, erreicht haben (Fig. 1b), löst sich das Haltemittel 19 von dem Kunststoffprofil 10, welches im gleichen Moment zusammen mit der Form 14 zurück in die Ausgangsstellung bewegt wird (Fig. 1c). Das Haltemittel 19 bewegt sich ebenfalls entgegen Herstellungsrichtung 17 in die Ausgangsstellung zurück (Fig. 1d). Bedingt durch die Reibung wird das fertiggestellte Kunststoffprofil 10 durch die Bewegung der Form 14 in Herstellungsrichtung 17 mitbewegt, sodass weitere Stränge 13 der Verstärkung 11 von der Abspuleinrichtung 16 abgerollt werden. Bei der in der Fig. 1d dargestellten Endstellung des Herstellungszykluses ist deutlich zu sehen, dass nun ein längerer Abschnitt des fertiggestellten Kunststoffprofils 10 aus dem Haltemittel 19 herausragt. Sobald die Form 14 sowie das Haltemittel 19 diese Stellung erreicht haben, beginnt das Verfahren von Neuem, sodass das Kunststoffprofil 10 kaum oder gar nicht zum Stillstand kommt und permanent "wächst".

Bei einem weiteren in den Fig. 2a bis 2d dargestellten Ausführungsbeispiel der vorliegenden Erfindung wird während eines Verfahrens zur Herstellung des Kunststoffprofils gemäß den Fig. 1a bis 1d eine Kühlform 20 zwischen der Form 14 und dem Haltemittel 19 festgehalten. Das in den Fig. 2a bis 2d dargestellte Verfahren gleicht dem in den Fig. 1a bis 1d dargestellten Verfahren mit der Ausnahme, dass nun das Kunststoffprofil 10, nachdem es das vordere Ende 18 der Form 14 verlassen hat, durch die Kühlform 20 gekühlt wird. Durch die Kühlung härtet das Kunststoffprofil 10 schneller aus. Diese schnellere Auskühlung des Kunststoffprofils 10 ist insbesondere für einige Formen bzw. Materialien für ein Kunststoffprofil besonders vorteilhaft. Das sodann ausgekühlte Kunststoffprofil 10 wird dann wie zuvor beschrieben durch das Haltemittel 19 geschoben bzw. von dem Haltemittel 19 erfasst und in Herstellungsrichtung 17 gezogen.

Bei einem weiteren in der Fig. 3a bis 3d dargestellten Ausführungsbeispiel des erfindungsgemäßen Verfahrens ist zwischen der Form 14 und dem Haltemittel 19 eine Kühlform 21 angeordnet, die ebenfalls einen Schlitten zugeordnet ist und sich wie die Form 14 und das Haltemittel 19 entlang des Kunststoffprofils 10 bewegen kann. Diese Bewegung der Kühlform 21 auf dem Kunststoffprofil 10 kann mit der Bewegung der Form 14 und/oder dem Haltemittel 19 gekoppelt sein. Die gekoppelte Bewegung der Kühlform 21 mit der Form und/oder dem Haltemittel dient vor allem dazu, den Bereich des Kunststoffprofils 10, der nicht während des Herstellungsverfahrens durch die Form 14 oder das Haltemittel 19 gestützt wird, zu minimieren. Anstelle der Kühlform 21 kann auch in dem in den Fig. 3a bis 3d dargestellten Ausführungsbeispiel eine Kalibrierungsform vorgesehen sein.

An dieser Stelle sei ausdrücklich darauf hingewiesen, dass die vorliegende Erfindung nicht auf die in der Zeichnung dargestellten Ausführungsbeispiele eingeschränkt sein soll, sondern sich vielmehr auch auf weitere Ausführungsformen, insbesondere auf Ausführungsformen, bei denen Form, Kühleinheit und Greifer elastisch sind und sich geführt entlang der Gestalt des zu fertigenden Profils bewegen, erstreckt.

### Bezugszeichenliste

- 10: Kunststoffprofil
- 11: Verstärkung
- 12: Kunststoff
- 13: Strang
- 14: Form
- 15: hinteres Ende
- 16: Abspuleinrichtung
- 17: Herstellungsrichtung
- 18: vorderes Ende
- 19: Haltemittel
- 20: Kühlform
- 21: Kühlform

## Patentansprüche

1. Verfahren zur Herstellung eines vorzugsweise gekrümmten Kunststoffprofils (10), wobei eine durchgehende Verstärkung (11) aus Strängen (13), Geweben und/oder dergleichen von einem Haltemittel (19) durch eine Form (14) geführt und in der Form (14) im Kunststoff (12) eingebettet wird, wobei die Form (14) und das Haltemittel (19) auf dem Kunststoffprofil (10) in entgegengesetzte Richtungen bewegt werden, **dadurch gekennzeichnet, dass** das Kunststoffprofil (10) abwechselnd von der Form (14) und dem Haltemittel (19) in eine Herstellungsrichtung (17) bewegt wird, wobei die Form (14) und das Haltemittel (19) gleichzeitig bewegt werden, während das Kunststoffprofil (10) in Herstellungsrichtung (17) von der Form (14) oder dem Haltemittel (19) vorbewegt wird.

2. Verfahren nach Anspruch 1, **dadurch gekennzeichnet, dass** das Kunststoffprofil (10) von dem Haltemittel (19) gehalten und in eine Herstellungsrichtung (17) gezogen wird, während die Form (14), auf, insbesondere über das Kunststoffprofil (10) entgegen der Herstellungsrichtung (17) bewegt wird.

3. Verfahren nach Anspruch 1 oder 2, **dadurch gekennzeichnet, dass** das Kunststoffprofil (10) von der Form (14) in Herstellungsrichtung (17) bewegt bzw. geschoben wird, während das Haltmittel (19) auf dem Kunststoffprofil (10) entgegen der Herstellungsrichtung (17) auf die Form (14) zu bewegt, insbesondere in Kontakt mit der Form (14), gebracht wird.

4. Verfahren nach einem der vorhergehenden Ansprüche, **dadurch gekennzeichnet, dass** die Form (14) und das Haltemittel (19) gleichzeitig bewegt werden, während das Kunststoffprofil (10) ununterbrochen in Herstellungsrichtung (17) von der Form (14) oder dem Haltemittel (19) vorbewegt wird.

5. Verfahren nach einem der vorhergehenden Ansprüche, **dadurch gekennzeichnet, dass** die Form (14) und das Haltemittel (19) mit unterschiedlichen Geschwindigkeiten, insbesondere mit unterschiedlichen Beschleunigungen, in und/oder entgegen der Herstellungsrichtung (17) auf dem Kunststoffprofil (10) bewegt werden.

6. Verfahren nach einem der vorhergehenden Ansprüche, **dadurch gekennzeichnet, dass** die Form (14) und das Haltemittel (19) mit unterschiedlichem Hub bzw. unterschiedlichen Amplituden und/oder unterschiedlichen Frequenzen auf dem Kunststoffprofil (10) vorbewegt werden.

7. Verfahren nach einem der vorhergehenden Ansprüche, **dadurch gekennzeichnet, dass** die Form (14) und das Haltmittel (19) diskontinuierlich bzw. schrittweise auf dem Kunststoffprofil (10) hin- und herbewegt werden, wobei nur während der Bewegung der Form (14) und des Haltemittels (19) entgegen der Herstellungsrichtung (17) eine Relativbewegung der Form (14) und des Haltemittels (19) zum Kunststoffprofil (10) erfolgt.

8. Verfahren nach einem der vorhergehenden Ansprüche, **dadurch gekennzeichnet, dass** das Haltemittel (19) in Phasen in denen sich das Haltemittel (19) und die Form (14) auf dem Kunststoffprofil (10) aufeinander zu bewegen außer Kontakt mit dem Kunststoffprofil (10) gebracht und das Kunststoffprofil (10) nur von der Form (14) reibungsbedingt gehalten wird und das Kunststoffprofil (10) in Phasen, in denen sich das Haltemittel (19) und die Form (14) in entgegengesetzte Richtungen voneinander entfernen relativ zu der Form (14) bewegt und nur von dem Haltemittel (19) gehalten wird.

9. Verfahren nach einem der vorhergehenden Ansprüche, **dadurch gekennzeichnet, dass** das Kunststoffprofil (10) während der Herstellung von einer Kühlform (20, 21) und/oder einer Kalibrierungsform gekühlt und/oder kalibriert wird, wobei die Kühl- und/oder Kalibrierungsform (20, 21) insbesondere zwischen der Form (14) und dem Haltemittel (19) auf dem Kunststoffprofil (10) geführt wird.

10. Verfahren nach Anspruch 9, **dadurch gekennzeichnet, dass** die Kühl- und/oder Kalibrierungsform (20, 21) gekoppelt mit der Bewegung der Form (14) und/oder dem Haltemittel (19) auf dem Kunststoffprofil (10) bewegt wird.

11. Verfahren nach einem der vorhergehenden Ansprüche, **dadurch gekennzeichnet, dass** die Verstärkung (11) während der Bewegung der Form (14) stramm gehalten wird.

12. Vorrichtung zur Herstellung eines vorzugsweise gekrümmten Kunststoffprofils (10) mit einer Form (14), in der eine durchgehende Verstärkung (11) einbettbar ist, und einem Haltemittel (19), mit dem das Kunststoffprofil (10) durch die Form (14) führbar ist, **dadurch gekennzeichnet, dass** die mindestens eine Form (14) und das mindestens eine Haltemittel (19) auf dem Kunststoffprofil (10) gleichzeitig in entgegengesetzte Richtungen vor- und zurückbewegbar sind.

13. Vorrichtung nach Anspruch 12, **dadurch gekennzeichnet, dass** das mindestens eine Haltemittel (19) in Herstellungsrichtung (17) betrachtet vor der mindestens einen Form (14) angeordnet ist, wobei das mindestens eine Haltemittel (19) und/oder die mindestens eine Form (14) zur Herstellung einer lösbaren Greifverbindung mit dem fertigen Kunststoffprofil (10) ausgebildet sind.

14. Vorrichtung nach Anspruch 12 oder 13, **dadurch gekennzeichnet, dass** auf dem Kunststoffprofil (10), insbesondere zwischen der Form (14) und dem Haltemittel (19), eine Kühlform (20, 21) und/oder eine Kalibrierungsform angeordnet sind.

15. Vorrichtung nach Anspruch 14, **dadurch gekennzeichnet, dass** die Kühl- und/oder Kalibrierungsform (20, 21) an die Bewegung der Form (14) und/oder dem Haltemittel (19) auf dem Kunststoffprofil (10) koppelbar sind.

## Claims

1. A method for producing a preferably curved plastic profile (10), wherein a continuous reinforcement (11) comprising strands (13), webs and/or the like is guided by a holding means (19) through a mold (14) and embedded in plastic (12) in the mold (14), wherein the mold (14) and the holding means (19) are moved in opposite directions on the plastic profile (10), **characterized in that** the plastic profile (10) is moved alternately by the mold (14) and the holding means (19) in a production direction (17), wherein the mold (14) and the holding means (19) are moved simultaneously, whilst the plastic profile (10) is moved forward in the production direction (17) by the mold (14) or the holding means (19).

2. The method as claimed in claim 1, **characterized in that** the plastic profile (10) is held by the holding means (19) and pulled in a production direction (17), whilst the mold (14) is moved on, in particular over, the plastic profile (10) contrary to the production direction (17).

3. The method as claimed in claim 1 or 2, **characterized in that** the plastic profile (10) is moved or pushed by the mold (14) in the production direction (17), whilst the holding means (19) is moved contrary to the production direction (17) on the plastic profile (10) toward the mold (14), in particular brought into contact with the mold (14).

4. The method as claimed in one of the preceding claims, **characterized in that** the mold (14) and the holding means (19) are moved simultaneously, whilst the plastic profile (10) is moved forward uninterruptedly in the production direction (17) by the mold (14) or the holding means (19).

5. The method as claimed in one of the preceding claims, **characterized in that** the mold (14) and the holding means (19) are moved in or contrary to the production direction (17) on the plastic profile (10) at different velocities, in particular with different accelerations.

6. The method as claimed in one of the preceding claims, **characterized in that** the mold (14) and the holding means (19) are moved forward on the plastic profile (10) with a different stroke or different amplitudes and/or different frequencies.

7. The method as claimed in one of the preceding claims, **characterized in that** the mold (14) and the holding means (19) are moved discontinuously or incrementally back and forth on the plastic profile (10), wherein a relative movement of the mold (14) and the holding means (19) with respect to the plastic profile (10) takes place only during the movement of the mold (14) and the holding means (19) contrary to the production direction (17).

8. The method as claimed in one of the preceding claims, **characterized in that,** in phases in which the holding means (19) and the mold (14) move toward one another on the plastic profile (10), the holding means (19) is brought out of contact with the plastic profile (10) and the plastic profile (10) is only held frictionally by the mold (14) and, in phases in which the holding means (19) and the mold (14) move in opposite directions away from one another, the plastic profile (10) is moved relative to the mold (14) and is only held by the holding means (19).

9. The method as claimed in one of the preceding claims, **characterized in that,** during production, the plastic profile (10) is cooled and/or calibrated by a cooling mold (20, 21) and/or a calibrating mold, wherein the cooling and/or calibrating mold (20, 21) is guided in particular between the mold (14) and the holding means (19) on the plastic profile (10).

10. The method as claimed in claim 9, **characterized in that** the movement of the cooling and/or calibrating mold (20, 21) on the plastic profile (10) is coupled with the movement of the mold (14) and/or the holding means (19).

11. The method as claimed in one of the preceding claims, **characterized in that** the reinforcement (11) is held taut during the movement of the mold (14).

12. A device for producing a preferably curved plastic profile (10), having a mold (14), in which a continuous reinforcement (11) can be embedded, and a holding means (19) with which the plastic profile (10) can be guided through the mold (14), **characterized in that** the at least one mold (14) and the at least one holding means (19) can be moved simultaneously back and forth on the plastic profile (10) in opposite directions.

13. The device as claimed in claim 12, **characterized in that,** as seen in the production direction (17), the at least one holding means (19) is arranged in front of the at least one mold (14), wherein the at least one holding means (19) and/or the at least one mold (14) are formed for producing a releasable gripping connection with the finished plastic profile (10).

14. The device as claimed in claim 12 or 13, **characterized in that** a cooling mold (20, 21) and/or a calibrating mold are arranged on the plastic profile (10), in particular between the mold (14) and the holding means (19).

15. The device as claimed in claim 14, **characterized in that** the cooling and/or calibrating mold (20, 21) can be coupled to the movement of the mold (14) and/or the holding means (19) on the plastic profile (10).

## Revendications

1. Procédé de fabrication d'un profilé en plastique (10) de préférence courbé, un renforcement continu (11) composé de brins (13), de tissus et/ou similaires étant acheminé par un moyen de maintien (19) à travers un moule (14) et incorporé dans la matière plastique (12) dans le moule (14), le moule (14) et le moyen de maintien (19) étant déplacés sur le profilé en matière plastique (10) dans des directions opposées, **caractérisé en ce que** le profilé en matière plastique (10) est déplacé alternativement par le moule (14) et le moyen de maintien (19) dans une direction de fabrication (17), le moule (14) et le moyen de maintien (19) étant déplacés simultanément, tandis que le profilé en matière plastique (10) est avancé dans la direction de fabrication (17) par le moule (14) ou le moyen de maintien (19).

2. Procédé selon la revendication 1, **caractérisé en ce que** le profilé en matière plastique (10) est maintenu par le moyen de maintien (19) et tiré dans une direction de fabrication (17), tandis que le moule (14) est déplacé sur, notamment au-dessus du profilé en matière plastique (10) à l'encontre de la direction de fabrication (17).

3. Procédé selon la revendication 1 ou 2, **caractérisé en ce que** le profilé en matière plastique (10) est déplacé ou poussé par le moule (14) dans la direction de fabrication (17), tandis que le moyen de maintien (19) est déplacé sur le profilé en matière plastique (10) à l'encontre de la direction de fabrication (17) vers le moule (14), notamment en contact avec le moule (14).

4. Procédé selon l'une quelconque des revendications précédentes, **caractérisé en ce que** le moule (14) et le moyen de maintien (19) sont déplacés simultanément, tandis que le profilé en matière plastique (10) est avancé sans interruption dans la direction de fabrication (17) par le moule (14) ou le moyen de maintien (19).

5. Procédé selon l'une quelconque des revendications précédentes, **caractérisé en ce que** le moule (14) et le moyen de maintien (19) sont déplacés à des vitesses différentes, notamment avec des accélérations différentes, dans et/ou à l'encontre de la direction de fabrication (17) sur le profilé en matière plastique (10) .

6. Procédé selon l'une quelconque des revendications précédentes, **caractérisé en ce que** le moule (14) et le moyen de maintien (19) sont avancés sur le profilé en matière plastique (10) avec une course différente ou des amplitudes différentes et/ou des fréquences différentes.

7. Procédé selon l'une quelconque des revendications précédentes, **caractérisé en ce que** le moule (14) et le moyen de maintien (19) sont déplacés en va-et-vient de manière discontinue ou par étapes sur le profilé en matière plastique (10), un déplacement relatif du moule (14) et du moyen de maintien (19) par rapport au profilé en matière plastique (10) n'ayant lieu que pendant le déplacement du moule (14) et du moyen de maintien (19) à l'encontre de la direction de fabrication (17).

8. Procédé selon l'une quelconque des revendications précédentes, **caractérisé en ce que,** dans les phases dans lesquelles le moyen de maintien (19) et le moule (14) se déplacent l'un vers l'autre sur le profilé en matière plastique (10), le moyen de maintien (19) est mis hors de contact avec le profilé en matière plastique (10) et le profilé en matière plastique (10) est maintenu par friction uniquement par le moule (14) et, dans les phases dans lesquelles le moyen de maintien (19) et le moule (14) s'éloignent l'un de l'autre dans des directions opposées, le profilé en matière plastique (10) est déplacé par rapport au moule (14) et est maintenu uniquement par le moyen de maintien (19).

9. Procédé selon l'une quelconque des revendications précédentes, **caractérisé en ce que** le profilé en matière plastique (10) est refroidi et/ou calibré pendant la fabrication par un moule de refroidissement (20, 21) et/ou un moule de calibrage, le moule de refroidissement et/ou de calibrage (20, 21) étant notamment acheminé sur le profilé en matière plastique (10) entre le moule (14) et le moyen de maintien (19).

10. Procédé selon la revendication 9, **caractérisé en ce que** le moule de refroidissement et/ou de calibrage (20, 21) est déplacé sur le profilé en matière plastique (10) en étant couplé au déplacement du moule (14) et/ou du moyen de maintien (19).

11. Procédé selon l'une quelconque des revendications précédentes, **caractérisé en ce que** le renforcement (11) est maintenu tendu pendant le déplacement du moule (14).

12. Dispositif pour la fabrication d'un profilé en matière plastique (10) de préférence courbé, comprenant un moule (14) dans lequel peut être incorporé un renforcement continu (11), et un moyen de maintien (19) avec lequel le profilé en matière plastique (10) peut être acheminé à travers le moule (14), **caractérisé en ce que** l'au moins un moule (14) et l'au moins un moyen de maintien (19) peuvent être déplacés simultanément en avant et en arrière sur le profilé en matière plastique (10) dans des directions opposées.

13. Dispositif selon la revendication 12, **caractérisé en ce que** l'au moins un moyen de maintien (19) est agencé, tel que vu dans la direction de fabrication (17), avant l'au moins un moule (14), l'au moins un moyen de maintien (19) et/ou l'au moins un moule (14) étant configurés pour réaliser une liaison de préhension détachable avec le profilé en matière plastique (10) fini.

14. Dispositif selon la revendication 12 ou 13, **caractérisé en ce qu'**un moule de refroidissement (20, 21) et/ou un moule de calibrage sont agencés sur le profilé en matière plastique (10), notamment entre le moule (14) et le moyen de maintien (19).

15. Dispositif selon la revendication 14, **caractérisé en ce que** le moule de refroidissement et/ou de calibrage (20, 21) peut être couplé au déplacement du moule (14) et/ou du moyen de maintien (19) sur le profilé en matière plastique (10).
